Europäisches Patentamt

European Patent Office

Office européen des brevets

(11) Publication number: **0 228 355**
A1

## EUROPEAN PATENT APPLICATION

(21) Application number: 86850419.2

(22) Date of filing: 04.12.86

(51) Int. Cl.⁴: **B 21 L 11/14,** F 16 G 15/12

(30) Priority: 04.12.85 SE 8505729

(43) Date of publication of application: 08.07.87
Bulletin 87/28

(84) Designated Contracting States: ES GB SE

(71) Applicant: **RAMNÄS AB, S-730 60 Ramnäs (SE)**

(72) Inventor: **De Laval, Gilbert, Lancashirevägen 7,
S-730 60 Ramnäs (SE)**

(74) Representative: **Arwidi, Bengt, Kanthal Electroheat AB
Box 502, S-734 00 Hallstahammar (SE)**

(54) Method of securing a stud in a chain link.

(57) The invention concerns a method of securing a stud in a chain link. On chains having been used in difficult circumstances the stud may have come loose because of corrosion and it is above all in such cases the invention is intended to be used. To secure a stud (2), which is placed in the correct position in the link (1), the stud (2) is exposed to radial pressing forces. The pressing forces need only be exerted on a small part of the surface of the stud. Hereby a lengthening of the stud is achieved so that it is jammed between the sides of the link.

CASE R017

0228355

Method of securing a stud in a chain link.
-------------------------------------------

This invention concerns a method of securing a stud in a chain link. This method is in the first place meant to be used for the repair of chains.

The chain links, especially those of heavier type as anchor chains for bigger vessels, off-shore platforms for oil drilling and the like, often are provided with studs. These are placed in the link in connection with its manufacture and are then jammed between the sides of the link. Because of corrosion and wear in the interface between stud and link eventually a play will ensue there. This play can gradually amount to some tenth of millimeters and result in the stud not functioning in the intended way.

This invention concerns a method to secure such link studs and is, in the first place, meant to be used in connection with repair of chains. The method according to the invention implies that the stud is exposed to radial pressing forces to the effect that a lengthening of the stud is taking place whereby this is clamped between the sides of the link. The press forces are transmitted via punches to two opposite surfaces of the waist of the stud. The pressing force is then executed by each punch onto a smaller part of the surface of the stud. The pressing can be performed at room temperature. Suitably it can be driven so far that a small deflection of the link sides occurs so that a certain clamping force is effected on the stud. For certain material, however, it could be necessary to heat the stud before pressing. Suitably only the centre part of the stud, where the press operation is effected, should be heated by means of highfrequency. When the working temperature is reached the pressing of the stud is done where it is seen to that the elongation of the stud is sufficient for the sides to be pressed out to the necessary extent to be able to spring back and compensate for the reduction of the length of the stud occurring when cooling down. After pressing and cooling down the stud shall be secured between the link sides.

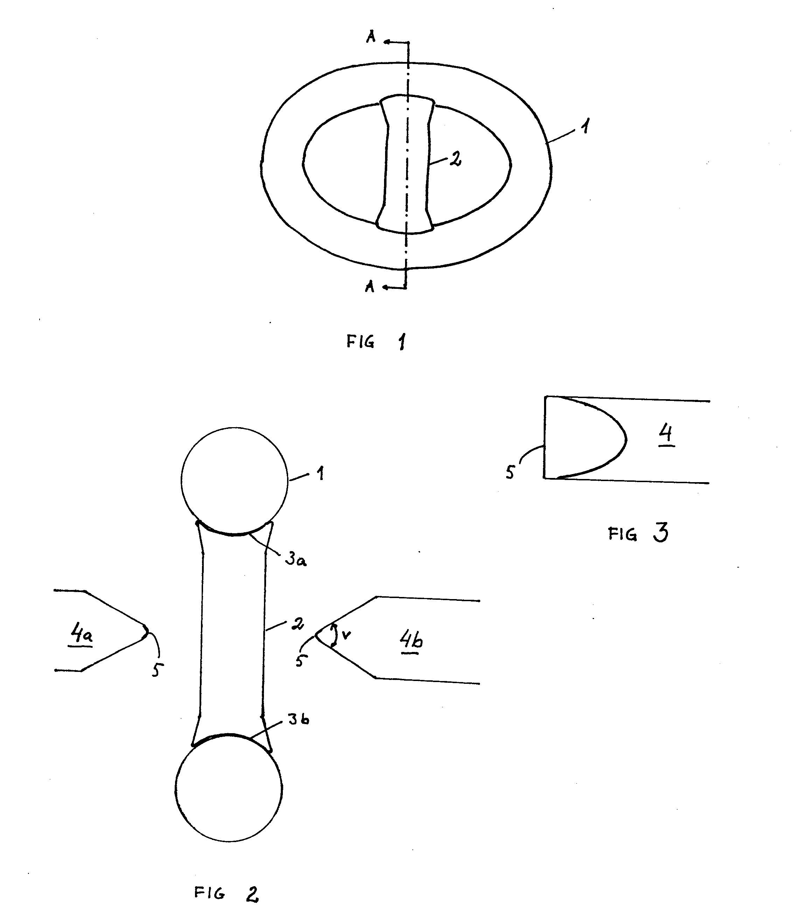

The invention will be illustrated further in the following by the examples shown in the figures. Fig. 1 shows a chain link with stud and fig. 2 shows a cross-section of the link and the stud. In fig. 2 also two punches are drawn used to exert the pressing force on the stud and in fig. 3 one of these punches is shown from the side. The chain link 1 is equipped with a stud 2. In the interfaces 3a, 3b between link and stud a play can occur after long time use of the chain. At reconditioning of the chain the stud is pressed into the link by exposing it to radial pressing forces of such rating that sufficient lengthening of the stud occurs. The pressing forces are applied by means of two opposite punches 4a, 4b. The punches are executed with a blunt edge 5 with an edge angle v ≈ 60° and a radius in the point of between 2 and 5 mm depending on the dimension of the link stud. Other devices for pressing of the stud are of conventional type and are not shown in the figures.

0228355

## C L A I M S

1.  Method of securing a stud in a chain link where the stud is
    exposed to radial pressing forces to the effect that a
    lengthening of the stud occurs whereby the stud is clamped
    between the sides of the link.

2.  Method according to claim 1 where the pressing forces are
    transmitted via punches to two opposite surfaces of the
    stud.

3.  Method according to any of the above claims where the
    pressing is performed in room temperature.

4.  Method according to any of the above claims 1 - 3 where the
    pressing is performed with the stud at increased temperature
    where the elongation of the stud is so big that the link
    sides are pressed out somewhat so that after cooling down
    the stud is secured.

FIG 1

FIG 3

FIG 2

| | European Patent Office | **EUROPEAN SEARCH REPORT** | 0228355 Application number |
| --- | --- | --- | --- |

EP 86 85 0419

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
| --- | --- | --- | --- |
| X | US-A-2 302 263 (SCHNECK) <br> * Page 1, right-hand column, line 5 - page 2, left-hand column, line 11; figures 4,5 * | 1,3 | B 21 L 11/14 <br> F 16 G 15/12 |
| X | GB-A- 604 623 (NORTH BRITISH ELECTRIC WELDING CO.) <br> * Page 2, lines 67-80; figure 3 * | 1,4 | |
| X | DE-C- 885 808 (BECKER & HÖNERBACH) <br> * Page 2, lines 1-9,68-69; figures 5,6 * | 1,2 | |
| A | FR-A-2 409 425 (STAS) | | |

TECHNICAL FIELDS SEARCHED (Int. Cl.4)

B 21 L
F 16 G

The present search report has been drawn up for all claims

| Place of search | Date of completion of the search | Examiner |
| --- | --- | --- |
| THE HAGUE | 16-03-1987 | BARON C. |